(19) Europäisches Patentamt
European Patent Office
Office européen des brevets

(11) **EP 1 807 727 B1**

(12) **FASCICULE DE BREVET EUROPEEN**

(45) Date de publication et mention
de la délivrance du brevet:
**18.02.2015 Bulletin 2015/08**

(51) Int Cl.:
***G02B 27/01*** *(2006.01)*      ***G02C 7/12*** *(2006.01)*

(21) Numéro de dépôt: **05810805.1**

(22) Date de dépôt: **07.10.2005**

(86) Numéro de dépôt international:
**PCT/FR2005/050829**

(87) Numéro de publication internationale:
**WO 2006/048564 (11.05.2006 Gazette 2006/19)**

(54) **AFFICHEUR OPHTALMIQUE COMPORTANT UNE LENTILLE OPHTALMIQUE ET UN IMAGEUR OPTIQUE**

OPHTHALMISCHE ANZEIGE MIT OPHTHALMISCHER LINSE UND OPTISCHEM BILD

OPHTHALMIC DISPLAY COMPRISING AN OPHTHALMIC LENS AND AN OPTICAL IMAGE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.11.2004 FR 0452541**

(43) Date de publication de la demande:
**18.07.2007 Bulletin 2007/29**

(73) Titulaire: **ESSILOR INTERNATIONAL COMPAGNIE GENERALE D'OPTIQUE**
**94227 Charenton Cédex (FR)**

(72) Inventeur: **MOLITON, Renaud,**
**c/o ESSILOR INTERNATIONAL**
**F-94227 Charenton Le Pont (FR)**

(74) Mandataire: **Lenne, Laurence**
**Feray Lenne Conseil**
**Le Centralis**
**63, avenue du Général Leclerc**
**92340 Bourg-la-Reine (FR)**

(56) Documents cités:
**EP-A- 1 176 449      WO-A-03/016032**
**US-A- 5 519 459      US-A- 5 598 231**
**US-A- 6 091 546      US-B1- 6 384 982**

EP 1 807 727 B1

**Description**

La présente invention concerne un afficheur ophtalmique comportant une lentille ophtalmique et un imageur optique destiné à permettre la projection d'informations, de type images ou multimédia.

Le mot «lentille» concerne en particulier un verre, correcteur ou non, destiné à être monté dans une monture de lunettes. Ce verre de lunette ophtalmique peut présenter des fonctionnalités traditionnelles que sont la correction de la vue, l'anti-reflet, l'anti-salissure, l'anti-rayure, par exemple.

Il est connu du brevet US 5 886 822 de réaliser une lentille ophtalmique présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

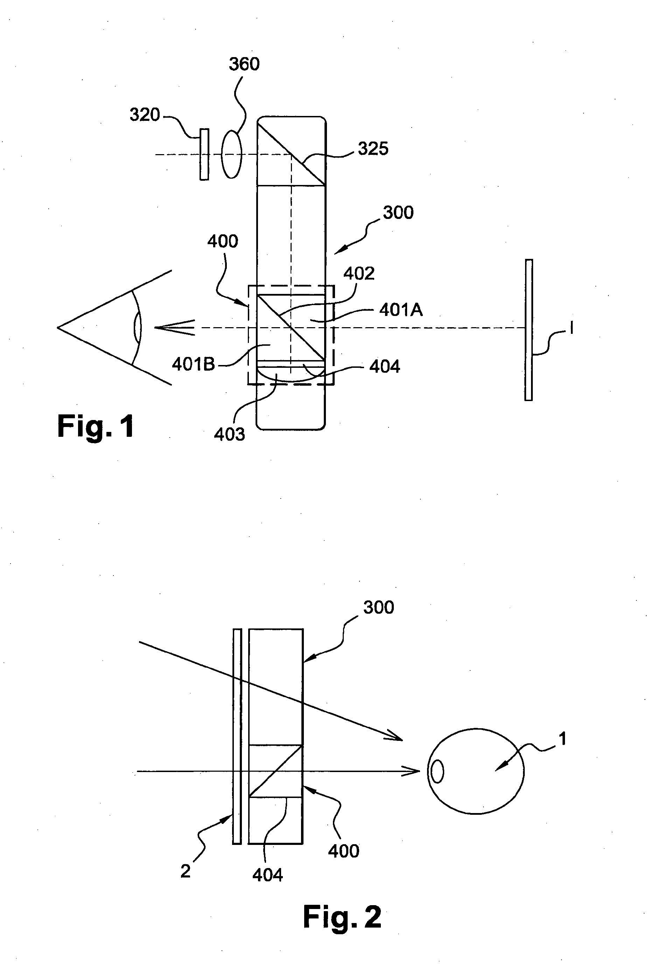

La figure 1 est une vue de dessus d'un tel afficheur ophtalmique connu.

Dans la lentille 300 est surmoulé un imageur 400 constitué d'un prisme 401A, d'un contre-prisme 401 B, d'une lame quart d'onde 404 et d'un miroir de Mangin 403. Le combineur comporte un traitement séparateur de polarisation 402 qui peut être réalisé sous forme d'un dépôt de couches minces.

Un signal électronique porteur d'une information est amené à un écran miniature par un câble non représenté. A partir de ce signal, l'écran miniature 320, éclairé par un projecteur de fond, génère une image pixellisée correspondant à l'information.

Un faisceau lumineux en provenance de l'écran miniature et dont la trajectoire est schématisée par une ligne en pointillés est transmis par l'intermédiaire d'une lentille 360 et d'un miroir 325 dans la lentille qu'elle traverse pour arriver sur le traitement séparateur de polarisation 402. La polarisation du faisceau de lumière émis par cet écran est orientée de telle sorte qu'elle se situe dans le plan d'incidence des rayons lumineux sur le traitement séparateur de polarisation 402. On dit qu'elle est orientée selon la direction P. Le faisceau lumineux se propage ensuite au travers du contre-prisme 401, puis atteint la lame quart d'onde 404, puis le miroir de Mangin 403 sur lequel il est réfléchi pour retraverser la lame quart d'onde en sens inverse. Le miroir de Mangin a pour rôle de produire une image I agrandie de l'écran ainsi que de la positionner de telle sorte qu'elle soit à distance de vision confortable pour l'utilisateur. Communément, cette distance de vision a été réglée de telle sorte que, au final, l'image apparaisse à l'utilisateur comme si elle se situait à 1m de lui. En outre, la taille apparente de l'image peut être de l'ordre de 12° sur la diagonale, selon les caractéristiques de l'imageur.

La lame quart d'onde 404 a ses axes orientés à 45 degrés de la polarisation du faisceau lumineux. Ainsi, lors de la première traversée du faisceau lumineux, celui-ci ressort avec un état de polarisation circulaire. Enfin, à l'issue de la deuxième traversée, le faisceau a un état de polarisation linéaire, mais orienté à 90° de sa polarisation initiale. De cette façon, lorsque le faisceau lumineux réfléchi par le miroir de Mangin 403 et ayant traversé une deuxième fois la lame quart d'onde 404, rencontre le traitement séparateur de polarisation 402, il possède alors une direction de polarisation perpendiculaire au plan d'incidence, communément rappelée S. Il est ainsi réfléchi avec une grande efficacité photométrique vers l'oeil du porteur qui voit ainsi l'image agrandie I de l'écran miniature 320 par le miroir de Mangin 403.

Par ailleurs, selon le document de brevet US 6 091 546, un afficheur de ce type comporte une caméra et, afin de la cacher, il est envisagé de disposer des revêtements de polarisation ou de teinter la lentille.

Un tel afficheur présente les problèmes suivants.

Cet insert 400 délimite sensiblement un cube de surface égale à la surface frontale de l'insert dans lequel la vision de l'environnement est perturbée. Hors ce cube, le porteur de la paire de lunettes peut voir l'environnement au travers de la lentille 300.

L'on constate que l'image informative I affichée par le système souffre d'une perte de contraste due à la superposition de lumière venant de l'environnement externe. Ce phénomène est particulièrement perceptible lors d'utilisation du verre informatif en extérieur.

Le contraste a pour définition $C = (I_{on} - I_{off}) / (I_{on} + I_{off})$

où $I_{on}$ est l'intensité reçue par l'oeil lorsqu'il regarde une image informative placée devant son environnement et $I_{off}$ est l'image reçue par l'oeil lorsqu'il regarde son environnement sans image informative

Par ailleurs, ce cube séparateur de polarisation contenu dans la lentille est visible de l'extérieur ce qui produit un effet inesthétique. Ceci est dû au traitement multicouche séparateur de polarisation qui ne laisse passer globalement que 50 % de la lumière ambiante, non polarisée.

L'objet de l'invention est de proposer un afficheur ophtalmique permettant de résoudre ces problèmes, en permettant de conserver un contraste correct de l'image et de cacher ce cube et de le rendre le moins visible possible.

Pour ce faire, l'invention propose un afficheur ophtalmique comportant une lentille ophtalmique contenant un insert imageur optique présentant une direction de polarisation et destiné à mettre en forme des faisceaux optiques et à les diriger vers l'oeil du porteur pour permettre la visualisation d'un contenu informationnel, afficheur comportant également au moins un élément polariseur destiné à être disposé sur une face de la lentille, caractérisé en ce que ledit élément polariseur est constitué d'un élément à polarisation réglable.

Selon un mode de réalisation, ledit élément polariseur présente une polarisation perpendiculaire à celle de l'insert.

De plus, selon un autre mode de réalisation, ledit élément polariseur présente une polarisation parallèle à celle de l'insert.

De préférence, ledit élément polariseur comprend un film actif à base de molécules chirales à magnitude de rotation de la polarisation réglable.

Et avantageusement, ledit film actif est pixellisé, chaque pixel étant soumis individuellement à un signal électrique.

L'invention est décrite ci-après plus en détail à l'aide de figures ne repérsentant qu'un mode de réalisation préféré de l'invention.

La figure 2 est une vue schématique de l'invention.

La figure 3 est une vue transversale d'un afficheur conforme à l'invention, selon un mode de réalisation particulier.

La figure 4 illustre un afficheur conforme à l'invention, selon un autre mode de réalisation particulier.

Sur la figure 2 est représentée la lentille 300 contenant un insert imageur optique 400. A titre d'exemple, l'imageur optique est du même type que celui décrit dans le brevet US 5 886 822 déjà mentionné.

L'afficheur ophtalmique conforme à l'invention comporte cette lentille ophtalmique 300 contenant un insert imageur optique 400 présentant une direction de polarisation P et destiné à mettre en forme des faisceaux optiques et à les diriger vers l'oeil 1 du porteur pour permettre la visualisation d'un contenu informationnel. Il comporte également un élément polariseur 2 destiné à être disposé sur une face de la lentille 300, de préférence sa face avant.

Un tel cube séparateur de polarisation 400 présente une transmission élevée de la polarisation P, sensiblement égale à 90% ou plus, une transmission faible de la polarisation S et une réflexion élevée de la polarisation S, sensiblement égale à 90% ou plus, avec une réflexion faible de la polarisation P.

On dit alors que l'insert imageur 400 a une polarisation P et, selon ce mode de réalisation, le polariseur 2 présente une polarisation parallèle à celle de l'insert 400.

Dans cette configuration, l'alignement de la direction de polarisation du polariseur 2 avec la direction de la polarisation P du cube séparateur 400 a pour effet d'homogénéiser la transmission sur l'ensemble de la lentille. La visibilité du traitement multicouche 404 pour un observateur extérieur est donc fortement diminuée.

A titre d'exemple, supposons que l'on place la lentille 300 seule sur une feuille blanche. On a une transmission environnementale à travers le reste de la lentille sensiblement égale à 100% et la transmission environnementale à travers le cube 400 sensiblement égale à 50%, pour une lumière non polarisée. Alors le cube séparateur 400 apparaît avec un contraste égal à 0.33 et est donc nettement visible.

Plaçons alors sur la face avant de la lentille 300 le polariseur 2 orienté selon une direction de polarisation parallèle à celle de l'insert 400. On a une transmission environnementale à travers le reste de la lentille sensiblement égale à 50% et une transmission environnementale à travers le cube 400 sensiblement égale à 45%. Le cube séparateur 400 apparaît alors sous un contraste de 0,05 environ: ce qui représente un objet très peu visible.

L'élément polariseur peut être constitué d'une plaque amovible pouvant être solidarisée à la monture de lunette, de type « clip » pouvant être solidarisé à la monture par crochets ou parties aimantées.

L'élément polariseur peut être constitué d'un film pouvant être collé sur la lentille de façon définitive ou temporaire.

L'élément polariseur peut être constitué de couches déposées en film sur la lentille. Par exemple, ce type de polariseur peut être réalisé par un film, des molécules brossées ou un polariseur à fils comme connu de l'homme du métier.

Selon un mode de réalisation particulier, l'élément polariseur est constitué d'un élément à polarisation réglable. Il peut dans ce cas être constitué d'un film actif à base de molécules chirales à magnitude de rotation de la polarisation réglable.

Généralement, dans un tel type d'élément à polarisation réglable, on couple une couche de cristal liquide avec un polariseur classique. Au moyen d'une tension de commande, on peut faire varier l'orientation de l'ensemble polariseur. La commande de l'orientation de la polarisation est pilotée par l'utilisateur au moyen d'un boîtier de contrôle. Avantageusement, ce boîtier de contrôle est intégré dans un boîtier unique assurant le contrôle général de l'afficheur opthtalmique.

Ce dernier mode de réalisation présente l'avantage de permettre l'ajustement l'orientation du polariseur pour obtenir l'effet voulu.

En réglant la direction de la polarisation du système polarisateur parallèlement à celle de l'insert 400, on obtient un camouflage de cet insert 400 regardé de l'extérieur, comme déjà précisé ci-dessus.

En réglant la direction de la polarisation du système polariseur perpendiculairement à celle de l'insert 400, on réduit la brillance de l'image environnementale.

A titre d'ordres de grandeur, pour différentes conditions de luminosité, le contraste de l'image affichée I par une lentille informative 300 dont la luminance serait d'environ 120 Cd/m$^2$ est évalué selon le tableau ci-dessous, sans utilisation de polariseur conforme à l'invention.

|  | Contraste de l'image informative |
|---|---|
| Lumière intense (douleur) | <0.01 (0.006) |
| Temps ensoleillé | < 0.05 (0.041) |
| Temps nuageux | ~0.06 (0.066) |
| Travail de précision (CIE rec.) | ~0.4 (0.383) |
| Bureau (CIE rec.) | ~0.6 (0.661) |
| Ville la nuit | ~0.8 (0.835) |

Avec un polariseur 2 de direction croisée avec celle du cube séparateur 400, la transmission à travers ce cube chute considérablement. Plus l'efficacité du polariseur 2 et du traitement séparateur 402 sont bonnes, meilleure est l'amélioration du contraste. Idéalement, si le polariseur 2 et le traitement 402 sont parfaits, le contraste obtenu est égal à 1.

Dans la configuration où l'on souhaite améliorer le contraste de l'image informative par rapport la brillance de l'environnement, la direction du polariseur est croisée avec celle de la polarisation P du cube 400. Dans ce cas, la transmission environnementale à travers le reste de la lentille est d'environ 50% et la transmission environnementale à travers le cube 400 est proche de 0.

En estimant une efficacité du cube sensiblement égale à 90% et une efficacité du polariseur sensiblement égale à 99%, on obtient les valeurs de contraste suivantes, grâce à l'invention.

|  | Contraste de l'image informative |
|---|---|
| Lumière intense (douleur) | ~0.06 |
| Temps ensoleillé | ~0.3 |
| Temps nuageux | ~0.4 |
| Travail de précision (CIE rec.) | ~0.8 |
| Bureau (CIE rec.) | ~0.9 |
| Ville la nuit | ~0.95 |

Par rapport au tableau précédent, on constate que l'on a très sensiblement amélioré le contraste, rendant l'équipement utilisable aisément jusque dans des conditions d'environnement extérieur de type « temps nuageux » voire jusque dans des conditions de « temps ensoleillé ».

Au cas où l'élément polariseur n'est pas constitué d'un élément à polarisation réglable, avantageusement, l'afficheur ophtalmique comporte également un second élément polariseur présentant une polarisation perpendiculaire à celle de l'insert 400 destiné à être disposé sur une face de la lentille 300.

Lors de l'utilisation du dispositif uniquement en tant que lentille correctrice de la vue, le porteur utilise le premier polariseur 2 qui assure un camouflage de l'insert imageur 400.

Lors de l'utilisation du dispositif en tant que lentille de visualisation d'une image informative I grâce à l'insert imageur 400, le porteur utilise, si besoin, le second polariseur qui assure un contraste optimal de l'image, même en cas de brillance environnementale importante.

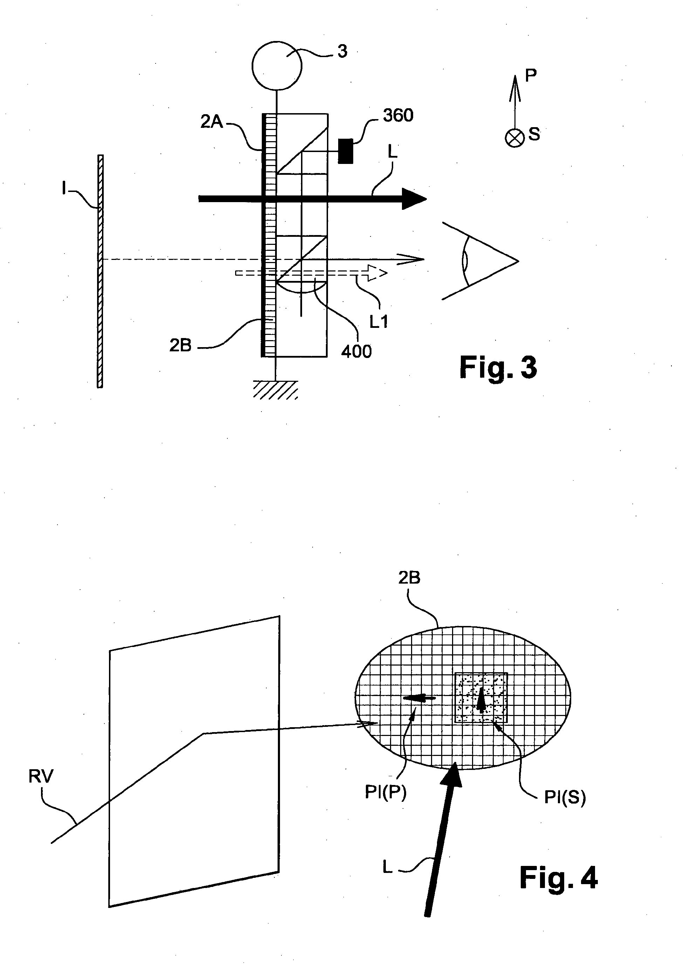

Selon un mode de réalisation particulier représenté sur la figure 3, l'élément polariseur est constitué d'un élément à polarisation réglable

Dans un tel type d'un élément à polarisation réglable, on couple une couche de cristal liquide 2B avec un polariseur classique 2A. Au moyen d'une tension de commande 3, on peut faire varier l'orientation de l'ensemble polariseur. La commande de l'orientation de la polarisation est pilotée par l'utilisateur au moyen d'un boîtier de contrôle.

A l'état de repos, on n'applique aucune tension au film de cristaux liquides 2B. Ainsi ces derniers ne transforment pas la polarisation de la lumière environnementale L qui passe à travers le verre.

Si l'élément polariseur est orienté selon S, alors la lumière environnementale L1 passant à travers le cube séparateur de polarisation prend cette polarisation et est bloquée par le traitement séparateur de polarisation. Le cube 400 apparaît opaque et alors, le contraste de l'image informative I est amélioré vis-à-vis de l'image de fond environnementale.

Inversement, si l'élément polariseur est orienté selon P, alors, la lumière environnementale L1 passe totalement à travers le cube séparateur 400 et avec une transmission sensiblement équivalente à celle de la lumière L passant au travers des autres parties du verre. L'insert est alors rendu peu visible pour un observateur extérieur.

A l'état activé, on applique une tension V au film de cristaux liquides 2B. Cette tension V est calculée par les moyens de l'art de telle sorte que les cristaux liquides fassent tourner la polarisation de la lumière de 90°. Ainsi, si le polariseur 2A est orienté selon la polarisation P, à la sortie de la couche de cristal liquide 2B, celle-ci sera devenue S; et si le polariseur 2A est orienté selon la polarisation S, à la sortie de la couche de cristal liquide, celle-ci sera devenue P. On obtient ainsi le comportement inverse de celui obtenu à l'état de repos.

Alternativement, on peut permettre à la tension V de varier continûment ou non entre 0 Volt et U Volts de façon à moduler la rotation infligée à la polarisation par le cristal liquide. On peut ainsi obtenir un comportement transitoire pour obtenir un compromis entre une moindre visibilité de l'insert et un meilleur contraste vis-à-vis de l'environnement, au choix de l'utilisateur.

Comme illustré sur la figure 4, il est possible de pixelliser le film de cristaux liquides 2B, de façon à pouvoir moduler localement la direction de polarisation. On adresse à chaque pixel individuellement, un signal électrique permettant de tourner la polarisation d'une quantité connue. Ces techniques sont connues du domaine des écrans par LCD. Ceci permet de moduler spatialement la transmission de la polarisation de manière pilotable. Cela peut être utile pour la vision d'environnements présentant une forte polarisation (surface de l'eau, ciel bleu à l'opposé du soleil, réflexion vitreuse, etc...) dans les conditions choisies par l'utilisateur, tout en maintenant soit une fonction de camouflage de l'insert, soit une fonction de contraste amélioré.

A titre d'exemple, la figure 4 illustre le cas d'une réflexion vitreuse de côté RV de l'environnement. Le film de cristaux liquides 2B comporte des pixels PI(S) selon la polarisation S et des pixels PI(P) selon la polarisation P. Les premiers PI(S) permettent d'améliorer le contraste vis à vis de l'environnement. Les seconds PI(P) permettent de couper la réflexion vitreuse RV venant de côté. La lumière restant de l'environnement est schématisée par la flèche L.

## Revendications

1. Afficheur ophtalmique comportant une lentille ophtalmique (300) et au moins un élément polariseur (2) destiné à être disposé sur une face de la lentille (300), qui contient un insert imageur optique (400) présentant une direction de polarisation et destiné à mettre en forme des faisceaux optiques et à les diriger vers l'oeil (1) du porteur pour permettre la visualisation d'un contenu informationnel (I), caractérisé en ce queledit élément polariseur est constitué d'un élément à polarisation réglable (2A, 2B).

2. Afficheur selon la revendication 1, **caractérisé en ce que** ledit élément polariseur présente une polarisation perpendiculaire à celle de l'insert (400).

3. Afficheur selon la revendication 1 et 2, **caractérisé en ce que** ledit élément polariseur présente une polarisation parallèle à celle de l'insert (400).

4. Afficheur selon l'une des revendications précédentes, **caractérisé en ce que** ledit élément polariseur comprend un film actif (2B) à base de molécules chirales à magnitude de rotation de la polarisation réglable.

5. Afficheur selon la revendication 4, **caractérisé en ce que** ledit film actif (2B) est pixellisé, chaque pixel étant soumis individuellement à un signal électrique.

## Patentansprüche

1. Ophthalmische Anzeigeeinrichtung, die eine ophthalmische Linse (300) und wenigstens ein Polarisatorelement (2), das dazu bestimmt ist, auf einer Fläche der Linse (300) angeordnet zu werden, umfasst, wobei die Anzeigeeinrichtung einen Einsatz (400) eines optischen Bildgebers enthält, der eine Polarisationsrichtung aufweist und dazu bestimmt ist, optische Strahlenbündel zu formen und sie zum Auge (1) des Trägers zu richten, um die Sichtbarmachung eines Informationsgehalts (I) zu ermöglichen, **dadurch gekennzeichnet, dass** das Polarisatorelement aus einem Element (2A, 2B) mit regulierbarer Polarisation gebildet ist.

**2.** Anzeigeeinrichtung nach Anspruch 1, **dadurch gekennzeichnet, dass** das Polarisatorelement eine Polarisation aufweist, die zu jener des Einsatzes (400) senkrecht ist.

**3.** Anzeigeeinrichtung nach Anspruch 1 und 2, **dadurch gekennzeichnet, dass** das Polarisatorelement eine Polarisation aufweist, die zu jener des Einsatzes (400) parallel ist.

**4.** Anzeigeeinrichtung nach einem der vorhergehenden Ansprüche, **dadurch gekennzeichnet, dass** das Polarisatorelement einen aktiven Film (2B) auf der Basis chiraler Moleküle mit regulierbarer Größe der Polarisationsrotation umfasst.

**5.** Anzeigeeinrichtung nach Anspruch 4, **dadurch gekennzeichnet, dass** der aktive Film (2B) aus Pixeln gebildet ist, wobei jedes Pixel einzeln einem elektrischen Signal unterworfen wird.

**Claims**

**1.** Ophthalmic display comprising an ophthalmic lens (300) and at least one polarizing element (2) intended to be placed on one face of the lens (300), which contains an optical imaging insert (400) having a polarization direction and intended to shape optical beams and direct them towards the eye (1) of the wearer in order to allow informational content (I) to be displayed, **characterized in that** said polarizing element consists of an element (2A, 2B) the polarization of which is adjustable.

**2.** Display according to Claim 1, **characterized in that** said polarizing element has a polarization perpendicular to that of the insert (400).

**3.** Display according to Claim 1 and 2, **characterized in that** said polarizing element has a polarization parallel to that of the insert (400).

**4.** Display according to one of the preceding claims, **characterized in that** said polarizing element comprises an active film (2B) based on chiral molecules the magnitude of rotation of the polarization of which is adjustable.

**5.** Display according to Claim 4, **characterized in that** said active film (2B) is pixelated, each pixel being individually subjected to an electrical signal.

360

320

325

300

400

402

401A

401B

404

403

**Fig. 1**

300

1

2

400

404

**Fig. 2**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5886822 A
- US 6091546 A